(19) Europäisches Patentamt
European Patent Office
Office européen des brevets

(11)  **EP 2 169 867 B1**

(12)  **EUROPEAN PATENT SPECIFICATION**

(45) Date of publication and mention
of the grant of the patent:
**27.03.2013  Bulletin 2013/13**

(51) Int Cl.:
***H04J 14/06*** *(2006.01)*

(21) Application number: **08290902.9**

(22) Date of filing: **24.09.2008**

(54) **A decision directed algorithm for adjusting a polarization demultiplexer in a coherent detection optical receiver**

Entscheidungsausgerichteter Algorithmus zum Einstellen eines Polarisationsdemultiplexers in einem kohärenten optischen Detektionsempfänger

Algorithme axé sur la décision pour le réglage d'un démultiplexeur de polarisation dans un récepteur optique cohérent de détection

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**31.03.2010  Bulletin 2010/13**

(73) Proprietors:
• **Alcatel Lucent**
**75007 Paris (FR)**
• **Institut National de Recherche en Informatique et en Automatique**
**78153 Le Chesnay Cedex (FR)**

(72) Inventors:
• **Charlet, Gabriel**
**c/o Alcatel-Lucent Bell Labs France**
**Centre de Villarceaux**
**91620 Nozay (FR)**
• **Salsi, Massimiliano**
**c/o Alcatel-Lucent Bell Labs France**
**Centre de Villarceaux**
**91620 Nozay (FR)**

• **Renaudier, Jeremie**
**c/o Alcatel-Lucent Bell Labs France**
**Centre de Villarceaux**
**91620 Nozay (FR)**
• **Cerou, Frederic**
**35200 Rennes (FR)**

(74) Representative: **Therias, Philippe et al**
**Alcatel-Lucent International**
**32, avenue Kléber**
**92700 Colombes (FR)**

(56) References cited:
WO-A-91/18455           US-A1- 2003 175 034
US-A1- 2008 170 862

• **SEB J SAVORY: "Digital filters for coherent optical receivers" OPTICS EXPRESS, OPTICAL SOCIETY OF AMERICA, WASHINGTON, DC, US, vol. 16, no. 2, 21 January 2008 (2008-01-21), pages 804-817, XP007906766 ISSN: 1094-4087**

**Description**

The invention relates to optical communication, in particular to a method for adjusting a polarization demultiplexer in a coherent detection optical receiver.

In fiber optics communications, two ways to detect the received light exist: direct detection and coherent detection.

In direct detection based systems, the photodetector at the receiver is typically directly fed by on-off modulated light and the resulting current of the photodetector corresponds to the received optical power. However, the phase information is lost.

In coherent detection receivers, the received optical light is coherently superpositioned with a single-frequency optical local oscillator (LO) signal. Such coherent detection receivers allow detecting the phase of the received signal as necessary for phase modulation schemes (e.g., HPSK - binary phase shift keying, or QPSK - quadrature phase shift keying). In addition to allowing phase detection, coherent detection of optical signals is a very attractive detection technique to compensate for fiber induced linear distortions.

Coherent detection schemes are also well suited for receiving optical signals based on polarization division multiplexing (PDM). A PDM signal is typically composed of two component signals, with the two component signals being transmitted via different orthogonal polarizations. Transmitting two signal components via two orthogonal polarizations allows increasing the data rate compared to non-PDM modulation formats. Alternatively, PDM allows decreasing the symbol rate per signal component and thus increasing the spectral efficiency.

Coherent detection of optical signals using the PDM QPSK (quadrature phase shift keying) format has been already demonstrated at 40 Gb/s and 100 Gb/s. For recovering two QPSK modulated signal components of such PDM QPSK signal, a polarization demultiplexer is used.

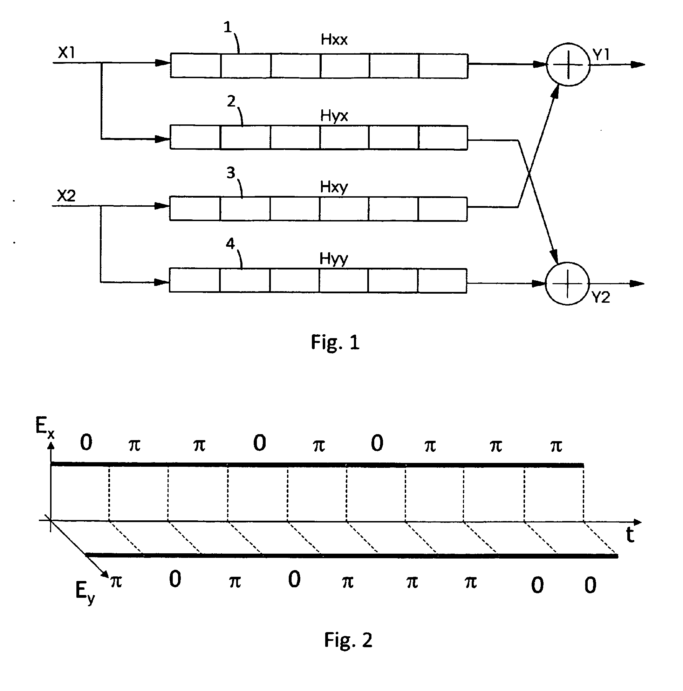

Such polarization demultiplexer may be realized in the electrical domain as illustrated in Fig. 1. The input signals X1 and X2 are derived from signals generated by an optical polarization beam splitter (not shown), which splits the received optical signal into a first optical wave and a second optical wave, with the polarizations of the first and second optical waves being orthogonal. The signals of the first and second optical waves typically do not correspond to the first and second components of the transmitted PDM signal, respectively. After optical-to-electrical conversion and optional analog-to-digital-conversion and optional filtering, the resulting electrical signals X1 and X2 are fed in the polarization demultiplexer.

The polarization demultiplexer is used to rotate the received signal components X1 and X2 for recovering the initial polarization components as multiplexed in the transmitter and for removing interferences between the two polarization components.

A basic rotation function of a polarization demultiplexer having output signals Y1 and Y2 (which should correspond to the original polarization components) may be specified as:

$$\begin{pmatrix} Y1(k) \\ Y2(k) \end{pmatrix} = \begin{pmatrix} \cos\theta\, X1(k) + \sin\theta\, X2(k) \\ -\sin\theta\, X1(k) + \cos\theta\, X2(k) \end{pmatrix} = \begin{pmatrix} \cos\theta & \sin\theta \\ -\sin\theta & \cos\theta \end{pmatrix}\begin{pmatrix} X1(k) \\ X2(k) \end{pmatrix} = \begin{pmatrix} Hxx & Hxy \\ Hyx & Hyy \end{pmatrix}\begin{pmatrix} X1(k) \\ X2(k) \end{pmatrix}$$

The elements Hij of the rotation matrix represent the coefficients of an adaptive filter.

To improve the accuracy of the filter and to use the filter also for signal equalization, the filter may not simply describe a rotation matrix but information from neighboring samples around the main samples is also taken into account as indicated in the embodiment of Fig. 1. Here, four FIR (finite impulse response) filters 1 to 4 are organized in a butterfly structure. The butterfly structure allows to weightedly combining the signal components X1 and X2, thereby generating the output signals Y1 and Y2. E.g. each of the FIR filters 1-4 may have 6 tap coefficients as indicated in Fig. 1. In case of performing a simple rotation, the 4 FIR filters in Fig. 1 can be replaced by 4 multipliers organized in the butterfly structure.

For adjusting the filter coefficients Hij of the polarization demultiplexer, typically the constant modulus algorithm (CMA) is used, i.e., the tap coefficients Hij of the polarization demultiplexer are computed by means of the CMA. The CMA updates the tap coefficients Hij in dependency on the current output values Y1, Y2 of the polarization multiplexer.

The CMA is discussed in the documents "Digital Equalisation of 40Gbit/s per Wavelength Transmission over 2480km of Standard Fibre without Optical Dispersion Compensation", S.J. Savory et al., Proceedings of ECOC 2006, Cannes, France, paper Th2.5.5, Sep. 2006.

The CMA is based on the idea that in a pure phase shift keying modulation scheme, the amplitude of the received signal does not change from symbol to symbol. The CMA tries to adjust the receiver in such a way that each of the demultiplexed and equalized signals Y1, Y2 lies on a circle in the constellation diagram. In case of assuming signals of unit amplitude, the CMA tries to minimize the magnitude of the error terms $\varepsilon_{y1} = 1 - |Y1|^2$ and $\varepsilon_{y2} = 1 - |Y2|^2$ to

force the signals Y1, Y2 to lie on the unity circle.

The exact equations for determining the updated filter coefficients based on the current filter coefficients, the error terms and the input and output signals are given in the cited document.

In case of a PDM-QPSK transmission scheme, CMA allows to simultaneously separate and equalize the received signal encoded along the two polarizations as discussed above. The filter coefficients may be updated over a time period which is much larger than the symbol duration. Hence, such kind of adaptive filter can be easily implemented with an FPGA (field programmable gate array) or ASIC (application-specific integrated circuit) in a block configuration (i.e. with parallel processing of consecutive symbols in parallel processing branches within the FPGA core).

Due to a frequency offset and carrier phase fluctuations, the beating of the received optical signal with the unlocked local oscillator signal results in a phase drift which needs to be compensated. This is typically done after polarization demultiplexing. For correction the phase, carrier phase estimation (CPE) is performed. This may be done in a feed-forward scheme by processing phase information of a plurality of consecutive symbols, e.g. of 5 to 15 consecutive symbols.

Such data processing may be also implemented in an FPGA. The data processing may be done at a few hundred MHz instead of the incoming symbol rate (e.g. 10 or 20 Gsymbols/s).

Although the CMA works in case of PDM QPSK signals, the CMA algorithm may not converge to the correct solution in case of PDM BPSK signals. Moreover, in case of PDM BPSK the CMA may be not even capable of staying locked on a correct solution once it was found. PDM BPSK is very attractive for long transmission distances at 40 Gbit/s data rate. This is due to the fact that coherent detection of PDM BPSK is more tolerant to non linear effects than coherent detection of PDM QPSK, thus allowing to transmit data over a longer transmission span.

The convergence problem of CMA is explained in the following:

Fig. 2 illustrates a PDM BPSK signal composed of two BPSK modulated signal components, each one transmitted of one of two orthogonal polarizations. A first signal component may be aligned to $E_x$, whereas a second signal component may be aligned to $E_y$. Each signal component may be either in a phase state with $\varphi = 0$ or $\varphi = \pi$.

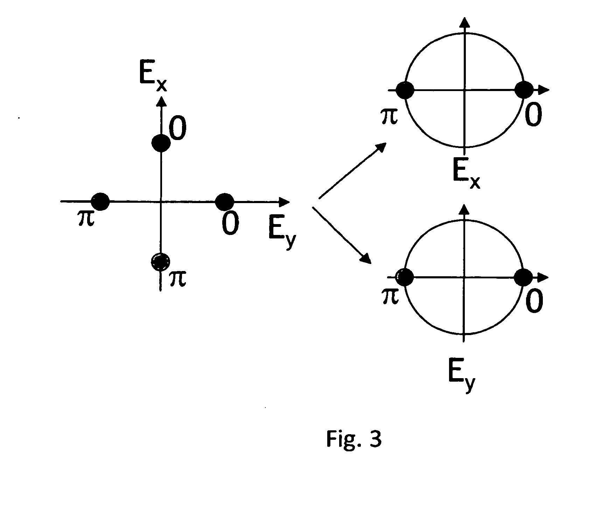

The polarization demultiplexing of a PDM BSPK signal in the coherent receiver should be adjusted to separate the two tributaries as shown in Fig. 3.

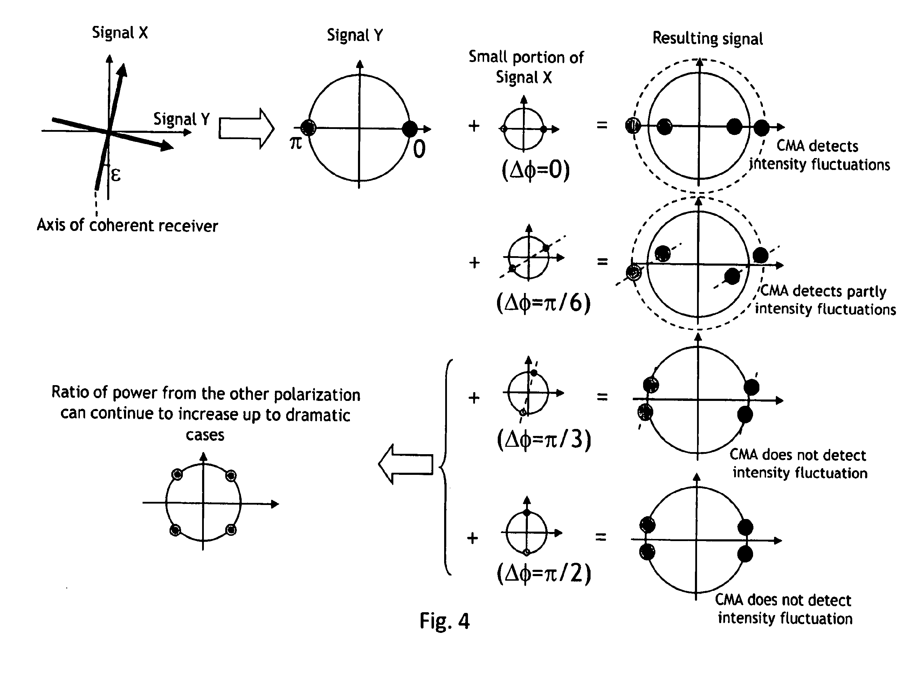

However, the polarization demultiplexing of a PDM BPSK signal when controlled by the CMA may converge to a different state as explained in Fig. 4. If the axes of the polarization demultiplexer in the coherent receiver are not perfectly aligned with the polarization axes of the two BPSK signals X and Y, polarization demultiplexing is not perfect. Such non-perfect polarization demultiplexing is illustrated in the upper left of Fig. 4, where the axes of the polarization demultiplexer in the coherent receiver are misaligned by an error angle $\varepsilon$. Therefore, the polarization demultiplexer does not produce the pure signal Y at one output of the polarization demultiplexer but a combination of a large portion of signal Y and a small portion of signal X. The resulting combined signal depends on the arbitrary phase difference $\Delta\Phi$ between the two polarizations, i.e. between signal Y and signal X. Fig. 4 illustrates 4 exemplary cases where $\Phi = 0$, $\Phi = \Pi/6$, $\Delta\Phi = n/3$, and $\Delta\Phi = n/2$. In case of $\Delta\Phi = 0$ and $\Delta\Phi = n/6$, the CMA at least partly detects intensity fluctuations and may adjust the polarization demultiplexer accordingly. However, in case of $\Delta\Phi = \Pi/3$ or even worse in case of $\Delta\Phi = \Pi/2$ when the signal points are nearly or completely located on the circle with same intensity, the CMA does not detect intensity fluctuation anymore and cannot adapt the polarization demultiplexer in the right direction. In these cases, the power of that polarization which carries signal X may continue to increase and the CMA may converge to the wrong solution as shown in the lower left of Fig. 4. Here, all 4 constellation points are located on a circle with same intensity (e.g. a circle with unity radius) and both outputs of the polarization demultiplexer carry a combination of signal X and signal Y with same amplitude. Since the CMA monitors whether the output signals of the polarization demultiplexer are located on a circle, the CMA does not detect any problem and does not tend to compensate this poor polarization demultiplexing state. Thus, the CMA cannot be used for PDM BPSK signals.

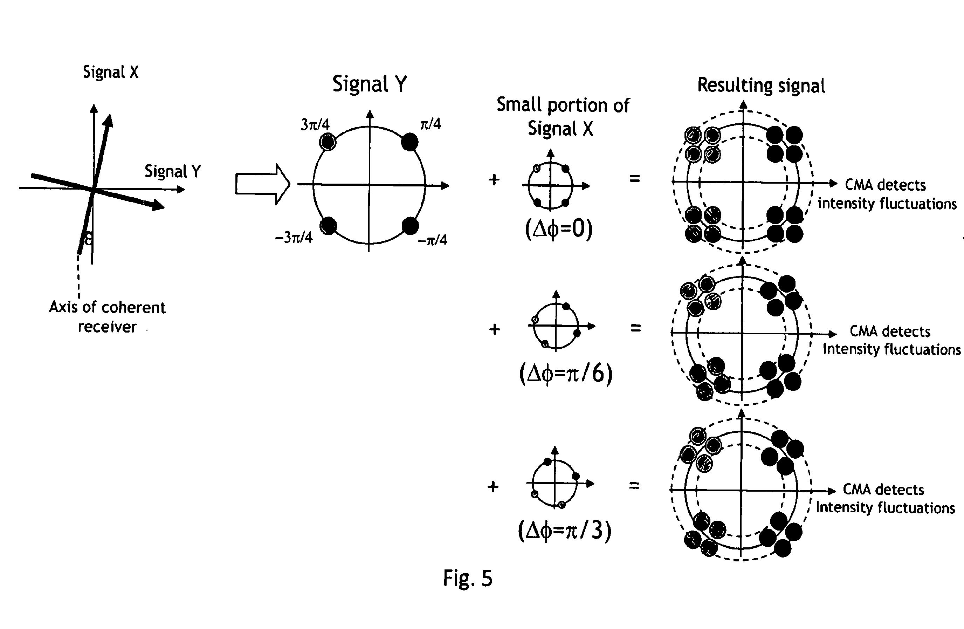

The situation is different when using the CMA in case of polarization demultiplexing a PDM QPSK signal. This is illustrated in Fig. 5. Here, in any case the CMA detects intensity fluctuations. This information is used by the algorithm to adapt the filter coefficients, thereby improving the polarization demultiplexing.

Prior art document "Digital filters for coherent optical receivers", Seb J. Savory, Optics Express, Vol. 16., No. 2, 21 January 2008, pages 804-817 discloses a receiver for receiving a PDM-QPSK modulated signal. The receiver comprises a polarization demultiplexer which is adapted by a CMA.

WO 91/18455 relates to a multilevel coherent optical transmission system, where the optical carrier is modulated both in phase and polarization. Each phase and polarization modulated symbol of the optical signal corresponds to a particular vector in a four-dimensional space representing the electrical field. The four dimensions of the vector stem from the inphase and quadrature phase terms of two reference axes of the polarization state. For transmission, N different symbols are used, i.e. the symbol alphabet comprises N elements. The receiver determines four base band signals $Z_1$-$Z_4$ corresponding to the components of the 4-dimensional vector. A decision circuit is used for comparing the actual 4-dimensional vector $Z_1$-$Z_4$ of the received signal with N different 4-dimensional reference vectors, thereby allowing to decide the received vector. The N 4-dimensional reference vectors are updated by calculating the mean value of the received vector components which are estimated by the decision circuit as corresponding to the respective reference vector. For controlling the mean value calculation, a control signal formed by the components of the actual decided vector is used. The control signal is used for controlling switches such that the received vector components are fed to the correct mean value computing blocks.

US 2008/017062 A1 discloses a receiver including one or more suitable components operable to demodulate a signal using polarization demultiplexing. The receiver includes a polarization controller, a polarization beam splitter (PBS), data demodulators, and a polarization controller monitor. The polarization controller realigns the polarization state of the two orthogonally polarized incoming signals with the axes of a polarization beam splitter (PBS) to avoid crosstalk between signals. The polarization controller may have any suitable setting to align the polarization of the output orthogonally polarized signals to the input of the PBS. For example, the polarization controller may be set to approximately 45 degrees. The polarization controller may receive instructions from the polarization controller monitor. The polarization beam splitter (PBS) splits the signal to yield orthogonal signal components, where each signal component is to be demodulated by a particular data demodulator. The data demodulators demodulate the signal components to obtain the transmitted data.

The polarization controller monitor may monitor the polarization of the received signal for changes that may have occurred during transmission. The polarization controller monitor may send instructions to the polarization controller to adjust the state of polarization of the received signal to compensate for changes. The polarization controller monitor may monitor the polarization indicating waveforms of the signal components to determine if the polarization state of the received signal has been properly aligned with the polarization beam splitter by the polarization controller. If the polarization state of the received signal has been properly polarized, the polarization indicating waveforms at the receiver should be substantially similar to the polarization indicating waveforms at the transmitter.

In US 2003/0175034 A1, a polarization of at least one modulated optical signal is varied at the transmitter side. Upon receiving the signals, propagation time variations of at least one optical signal are detected at the receiver side. These propagation time variations are determined preferably by evaluating the variations of the integral of the control signal of a voltage-controlled oscillator in the clock recovery and are a measure for existing polarization mode dispersion, which may be compensated by means of a polarization mode dispersion compensator.

It is an object of the present invention to provide an alternative method for adjusting a polarization demultiplexer in a coherent optical receiver. When used in a PDM BPSK transmission system such method should overcome said convergence problems in connection with PDM BPSK.

Further objects of the invention are to provide a corresponding method for polarization demultiplexing, a corresponding apparatus for adjusting a polarization demultiplexer, and a corresponding optical receiver comprising a polarization demultiplexer and such apparatus.

These objects are achieved by the methods, the apparatus and the receiver according to the independent claims.

One idea of the invention is to replace the CMA algorithm which has convergence issues when dealing with PDM BPSK modulated signals by a decision-directed algorithm which separates the polarizations. Moreover, such decision-directed algorithm may simultaneously equalize the signal and track carrier phase fluctuations. By using such algorithm, convergence to the wrong solution in case of PDM BPSK modulation as discussed in connection with Fig. 4 is prevented.

A first aspect of the invention relates to a method for adjusting a polarization demultiplexer in a coherent optical receiver. The optical receiver is configured for receiving a polarization division multiplexed phase modulated optical signal, preferably a PDM BPSK signal. Such polarization demultiplexer outputs a first signal component and a second signal component. According to the method, for at least one of the signal components, a symbol is estimated in dependency of a non-decided symbol downstream of the polarization demultiplexer. The estimated symbol is selected from a set of given modulation symbols of the phase modulation scheme, e.g. from two modulation symbols in case of BPSK. Preferably, symbol estimation is performed for both signal components. Typically, symbol estimation is performed continuously. The polarization demultiplexer is adjusted with the help of the symbol decision, i.e. the polarization demultiplexer is adjusted in dependency of the estimated symbol. Preferably, the polarization demultiplexer is continuously adapted. Such scheme forms a feedback loop since the polarization demultiplexer is adjusted in dependency of a signal downstream of the polarization demultiplexer.

Since the method makes use of symbol estimation (symbol decision), the method is a decision-directed method. It should be noted that the term "decision-directed" does not necessarily mean that such estimated symbols correspond to the output signal. Rather, estimated symbols may be used only for the purpose of adjusting the receiver. However, the estimated symbols preferably correspond to the output signal of the receiver.

It should be noted that the symbol estimation may be part of larger mathematical operation performed when determining an error value (see below).

CMA relies solely on driving the signal amplitude to be on a common circle. Therefore, CMA does not control the receiver anymore in case signal points are already located on such common circle. This is not case for the inventive method. The inventive decision-directed method controls the polarization demultiplexer based on estimated or decided symbols.

Typically, the polarization demultiplexer is an electrical polarization demultiplexer. Such polarization demultiplexer may be formed by 4 FIR filters connected in a butterfly structure as shown in Fig. 1. Such structure also performs signal equalization. Alternatively, the polarization demultiplexer may be realized by 4 single multipliers instead of 4 FIR filters (in this case the FIR filters in Fig. 1 are replaced by complex multipliers).

Preferably, the phase of the non-decided symbol was phase corrected before estimating the symbol based on the non-decided symbol. Thus, the algorithm works on stable constellation points. Instead of relying on donut-shaped constellation points in the constellation diagram as in case of CMA (since carrier phase estimation and correction is performed afterwards), the inventive method relies on clean constellation points for controlling the polarization demultiplexer. In case of BPSK, the two desired constellation points are -1 and +1. Any rotation with respect to the origin of the axis of the constellation diagram should be preferably estimated and corrected. Therefore, the receiver preferably comprises phase correcting means for correcting the phase of the received signal before (1) symbol estimation. In such case, a correcting phase is estimated to be applied by the phase correcting means. Typically, phase correction is performed for both signal components.

Preferably, the polarization demultiplexer forms a digital filter structure and has filter coefficients, which are updated by the decision-directed method.

The method may perform a decision-directed update function that evaluates - for each signal components -non-decided symbols (downstream of the polarization demultiplexer and after the phase correcting means) and updates the values of the filter coefficients in the polarization demultiplexer. Such decision-directed update function may be also used for updating the estimated phase corrections.

Typically, the polarization demultiplexer is adapted in dependency of an error signal or error function.

The method may perform an auto-adaption of filter-coefficients in the polarization demultiplexer by means of such error function. The error function may depend on the modulation format, i.e. PDM BPSK and PDM QPSK may have different error functions. Such error function typically depends on the estimated symbol and the non-decided symbol. The error function may determine an error between the non-decided symbol and the estimated symbol. E.g., the error function may evaluate a (simple) mathematical function corresponding to the complex distance between the non-decided symbol and the estimated symbol. The value of the error function may be determined by determining the difference between the non-decided symbol and the estimated symbol. Since the non-decided symbol is a complex number, the difference is typically a complex number.

In general, the error function may be dependent on the distance between the non-decided symbol and the estimated symbol or may be a measure for that this distance between the non-decided symbol and the estimated symbol.

Preferably, the estimated symbol corresponds to that symbol out of the set of given modulation symbols (e.g. +1 and -1 in case of BPSK) which is nearest to the non-decided symbol. Thus, the error function may evaluate a (simple) mathematical function corresponding to the complex distance between the non-decided symbol and the nearest expected constellation symbol.

In case of BPSK, the symbol may be estimated by evaluating the real-part of the non-decided symbol. In case the real-part of the non-decided symbol is positive, the estimated symbol is decided as +1. In case the real-part of the non-decided symbol is negative, the estimated symbol is decided as -1. Thus, the symbol decision may be performed simply by determining the sign of the real-part of the non-decided symbol.

It should be noted that the symbol decision may be part of larger mathematical operation performed when determining the error value. Thus, the symbol decision can be performed in the course of determining the error value and does not need to be performed before determining the error value.

Also, the phase correction may be determined in a decision-directed manner. The phase correction may be determined in dependency of an estimated (decided) symbol.

Preferably, the phase correction is determined by means of an error signal, with the error signal being dependent on an estimated symbol and a non-estimated symbol after phase-correction. In particular, the error signal may be dependent on an angle between an estimated symbol and a non-estimated symbol after phase-correction. The error signal may be computed by the following formula:

$$\mathrm{ERROR} = \mathrm{IMAG}\,(C \cdot \mathrm{CONJ}\,(\hat{C})).$$

The term C describes a non-decided symbol and the term $\hat{C}$ denotes the corresponding decided symbol which was estimated based thereon. CONJ($\hat{C}$) denotes the complex conjugate of $\hat{C}$. The function IMAG() returns the imaginary part. The right side of the equation above is an estimator for the angle between the non-decided symbol and the decided symbol. The above formula is not only valid for PDM BPSK but also for other modulation formats like PDM QPSK.

In case of PDM BPSK, the above formula may be simplified and the error signal may be computed according to the following formula:

$$\mathrm{ERROR} = \mathrm{IMAG}\,(\mathrm{C}\cdot \hat{C}\,).$$

Preferably, the phase correction is determined in the following way: a frequency offset is estimated by accumulating the error signal (preferably, after weighting the error signal by a frequency estimation gain). An updated phase correction value is determined by adding the current estimation for the frequency offset, the current phase correction and the current error signal (preferably, the current error signal is also weighted by a phase estimation gain before).

The impact of the error signal on the phase estimation and on the frequency estimation is different if two different gain parameters are provided. Typically, the gain of the frequency estimator is very low which corresponds to a large time constant of the control loop (slow control). Thus, the frequency estimation is updated over a large number of incoming symbols (e.g. 1000 symbols). The gain of the phase estimation is typically higher than the gain of the frequency estimation. Thus, the phase estimation is updated over a lower number of symbols (e.g. 64 symbols).

According to a preferred embodiment, the method is further for adjusting a signal equalizer based on estimated symbols in a decision-directed manner.

Advantageously, the signal equalizer and the polarization demultiplexer form a combined polarization demultiplexer/equalizer unit which is based on 4 FIR filters organized in a butterfly structure as already discussed in connection with Fig. 1.

The method may compute updated filter coefficients for the FIR filters. For each of the 4 FIR filters, the increment of an updated filter coefficient may be dependent on:

- a sample of that signal component which is received by the respective FIR filter, and
- a value of an error function, with the value of the error function depending on the estimated symbol and the non-decided symbol.

Moreover, the increment may be dependent on a gain parameter,

In particular, the increment of a tap value may correspond to the product formed by at least the following factors:

- the conjugate complex of a phase-shifted version of a sample of that signal component which is received by the respective FIR filter,
- a value of an error function, with the value of the error function depending on the estimated symbol and the non-decided symbol, and
- a gain parameter.

Preferably, symbols are estimated for both signal components. In this case, two error functions are computed; one error function for each polarization. The total error is then a vector composed of two elements.

Additional preferred embodiments of the first aspect of the invention are given in the dependent claims.

It should be noted that basically the above mentioned embodiments of the invention can be arbitrarily combined. Furthermore, it should be noted that the disclosure of the invention also covers other claim combinations than the claim combinations which are explicitly given by the back references in the dependent claim, i.e., the claims can be basically combined in any order.

A second aspect of the invention relates to a method for polarization demultiplexing by means of a polarization demultiplexer. The polarization demultiplexer is adjusted according to the method as discussed above.

A third aspect of the invention relates to a decision-directed apparatus for adjusting a polarization demultiplexer in a coherent receiver. In accordance with the method for adjusting the polarization demultiplexer, the apparatus comprises means for estimating - for at least one of the signal components - a symbol selected from a set of given modulation symbols of the phase modulation scheme in dependency of a non-decided symbol in a signal component downstream of the polarization demultiplexer. Moreover, means for adjusting the polarization demultiplexer in dependency of such symbol estimation are provided.

A fourth aspect of the invention relates to a coherent optical receiver for receiving a polarization multiplexed phase modulated optical signal. The optical receiver comprises a polarization demultiplexer and the decision-directed apparatus for adjusting the polarization demultiplexer, According to a preferred embodiment, the receiver comprises an electrical combined polarization demultiplexer/equalizer unit for implementing the polarization demultiplexer and a signal equalizer. The combined unit is based on 4 FIR filters organized in a butterfly structure.

The above remarks related to a particular aspect of the first aspect of the invention are basically also applicable to other aspects of the invention.

The invention is explained below in an exemplary manner with reference to the accompanying drawings, wherein

Fig. 1 illustrates an embodiment of a combined polarization demultiplexer and equalizer unit;

Fig. 2 illustrates an exemplary temporal course of a PDM BPSK signal;

Fig. 3 illustrates polarization demultiplexing of a PDM BPSK signal;

Fig. 4 illustrates the occurrence of convergence problems of the CMA in case of a PDM BPSK signal;

Fig. 5 illustrates that the convergence problems of Fig. 4 do not occur in case of a PDM QPSK signal;

Fig. 6 illustrates an embodiment of a conventional coherent receiver;

Fig. 7 illustrates a conventional realization of the digital signal processing part of a PDM QPSK receiver;

Fig. 8 illustrates a conventional combined polarization demultiplexing and equalization unit adjusted by the CMA;

Fig. 9 illustrates an experimental constellation of a 43 Gbit/s PDM BPSK signal after digital signal processing and before decision when using CMA;

Fig. 10 illustrates an embodiment of the inventive decision-directed scheme for adjusting a polarization demultiplexer;

Fig. 11 illustrates the idea behind the error signal used for adjusting the phase corrections;

Fig. 12 illustrates the scheme of the update algorithm for the frequency and phase estimators;

Fig. 13 illustrates an embodiment of an inventive receiver with decision-directed adaption of filter coefficients;

Fig. 14 illustrates a further embodiment of an inventive receiver with decision-directed adaption of filter coefficients and decision-directed frequency estimation; and

Fig. 15 illustrates a further embodiment of an inventive receiver with decision-directed adaption of filter coefficients and decision-directed frequency and phase estimation;

Fig. 16 illustrates a conventional feed-forward scheme for carrier phase and frequency estimation; and

Fig. 17 illustrates an experimental constellation of a 43 Gbit/s PDM BPSK signal after digital signal processing and before decision when using the inventive concept.

Figs. 1-5 were already discussed above.

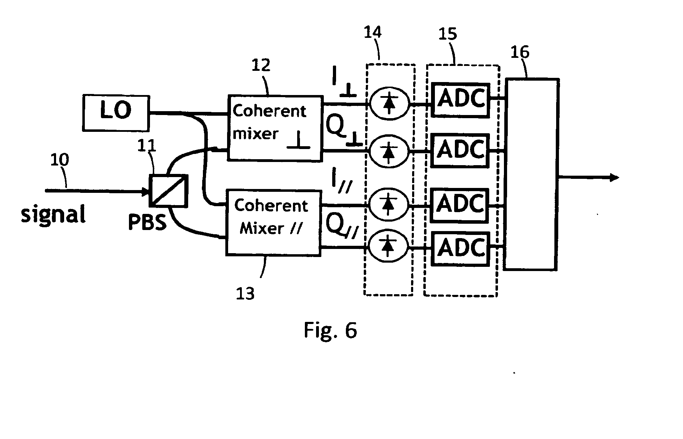

Fig. 6 shows an embodiment of a conventional coherent receiver for PDM signals, e.g. PDM QPSK signals or PDM BPSK signals. A polarization beam splitter (PBS) 11 splits a received optical signal 10 into a first optical wave and a second optical wave, with the polarizations of the first and second optical waves being orthogonal. The first optical wave is superimposed with an LO signal in a first coherent mixer 12, whereas the second optical wave is superimposed with an LO signal in a second coherent mixer 13. The mixers 12 and 13 output inphase (I) and quadrature phase (Q) components which are optical-to-electrical converted by optical-to-electrical converters 14. Afterwards, the four signal components are analog-to-digital converted by analog-to-digital converters (ADCs) 15. The further processing of the signal components is performed in the digital signal processing part 16 of the receiver, e.g. in a DSP (digital signal processor).

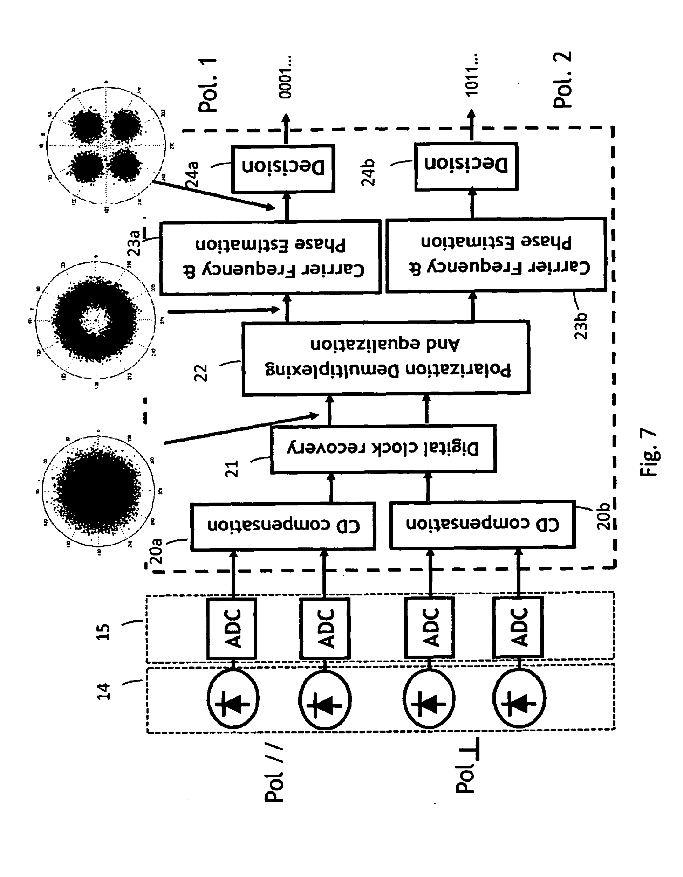

Fig. 7 illustrates a conventional realization of the digital signal processing part 16 in case of a PDM QPSK receiver. After sampling in the ADCs 15, the signals are fed in two CD (chromatic dispersion) compensation blocks 20a, 20b for compensating chromatic dispersion in the digital domain. The two CD compensated complex signals are used for clock recovery 21. The two CD compensated signals are also passed to a combined polarization demultiplexing and equalization unit 22. The polarization demultiplexing and equalization unit 22 may be realized as discussed in connection with Fig. 1. For adapting the filter coefficients of the FIR filters in unit 22 typically CMA is used. As illustrated in Fig. 7, the constellation diagram of a signal component at the output of unit 22 is donut-shaped. The CMA drives the constellation points on a common circle. The common circle is only theoretically reached; in practice, the constellation diagram is donut-shaped as shown in Fig. 7. The two signal components after polarization demultiplexing are fed to two carrier frequency and phase estimation blocks 23a and 23b. In these blocks 23a and 23b, the frequency offset between the carrier frequency and the frequency of the LO signal and the carrier phase fluctuations are determined. Based on these values, the phase of the signal components is corrected. The constellation diagram at the output of block 23a shows four distinct regions corresponding to the four modulation symbols of the QPSK modulation. The phase compensated signal components are fed to decision blocks 24a and 24b which perform signal decision.

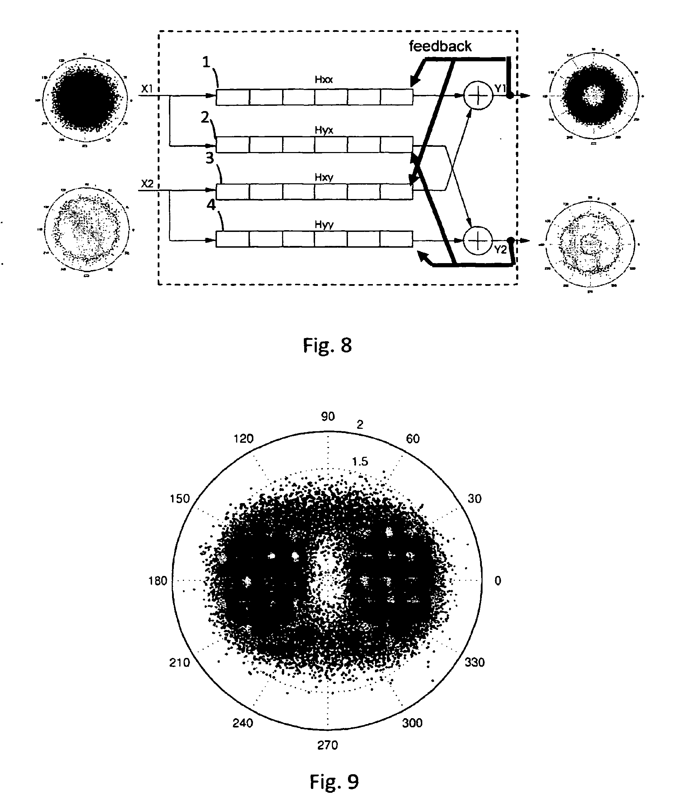

Fig. 8 shows in detail the conventional combined polarization demultiplexing and equalization unit 22 which is adjusted by the CMA. The working principle was already discussed in connection with Fig. 1. As discussed in connection with Fig. 3, the CMA is not working correctly for PDM BPSK. Experimental evidence for the wrong behavior of the CMA can be found in the constellation diagram shown in Fig. 9. Here, the experimental constellation of a 43 Gbit/s PDM BPSK signal after digital signal processing and before decision (see decision blocks 24a and 24b in Fig. 7) is shown. The dark constellation points correspond to one BPSK signal component on one polarization, whereas the light constellation points correspond to the other BPSK signal component on the orthogonal polarization. The polarization multiplexed signal is not completely recovered by the CMA. Here, the CMA converges to the correct solution only for one signal component (see light correlation points) and not for the other signal component (see dark correlation points). Moreover, even the area of the light correlation points is larger as it should be.

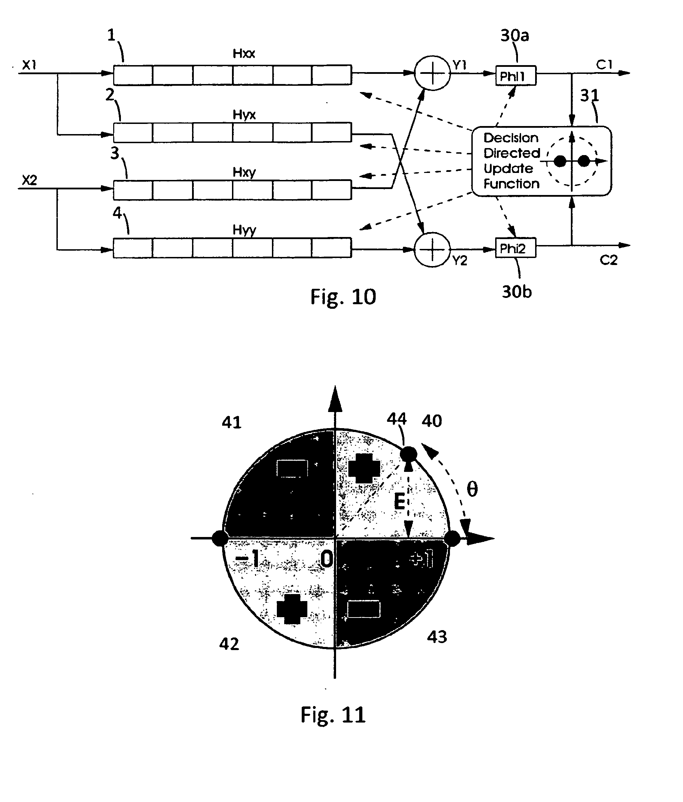

Fig. 10 shows an embodiment of the inventive decision-directed scheme for adjusting a polarization demultiplexer, with the algorithm overcoming said problems in case of PDM BPSK signals. The scheme uses a control loop with feedback for adjusting the polarization demultiplexer. Signals X1 and X2 represent the input signals for the polarization demultiplexer formed by 4 adaptive FIR filters 1-4 organized in a butterfly structure as already discussed in connection with Figs. 1 and 9. The FIR filters 1-4 also perform signal equalization. Output signal Y1 of the combined polarization demultiplexer/equalizer is formed by combining the output signals of FIR filters 1 and 3, whereas output signal Y2 of the combined polarization / equalizer is formed by combining the output signal of FIR filters 2 and 4. The output signals Y1 and Y2 are phase corrected by phase correction means 30a and 30b. The phase correction for signal Y1 is Phi1 and the phase correction for signal Y2 is Phi2. Thus, signals C1 and C2 correspond to the phase-corrected versions of Y1 and Y2, respectively.

The relations between signals Y1 and Y2 and the phase corrected versions C1 and C2 are the following:

$$C1 = Y1 \cdot e^{-j \cdot Phi1}$$

$$C2 = Y2 \cdot e^{-j \cdot Phi2}$$

The two signals C1 and C2 form the basis for the later signal decision (in other words: a decision made over these 2 symbols). Phase corrected non-decided symbols of signals C1 and C2 are evaluated by a decision-directed update function 31 that updates the coefficients Hij of the complex multitap filters 1-4. Preferably, also the estimated phases Phi1 and Phi2 are updated by the decision-directed update function 31. The update function 31 takes the clean constellation after the phase correction means 30a and 30b and performs signal decision in order to generate the correct feedback signal for adjusting the polarization demultiplexer.

The algorithm performs auto-adaption of the filter coefficients Hij by means of an error function. The error function is calculated after having estimated the output symbol with respect to the expected constellation. The error function may depend on the modulation format, i.e. PDM BPSK and PDM QPSK may have different error functions. Basically, the error function evaluates a simple mathematical function corresponding to the complex difference between an incoming symbol after digital signal processing (i.e. a symbol in signals Y1 or Y2) and the nearest expected constellation symbol (in case of BPSK: +1 or -1). In general, the error function may be dependent on the distance between the non-decided symbol and the estimated symbol, or may be a measure for that this distance between the non-decided symbol and the estimated symbol.

For computing a value of the error function, a symbol is decided. Typically, the decided symbol corresponds to that symbol out of the set of given modulation symbols (e.g. +1 and -1 in case of BPSK) which is nearest to the non-decided symbol. In case of BPSK, the symbol may be estimated by evaluating the real-part of the non-decided symbol, In case the real-part of the non-decided symbol is positive, the estimated symbol is decided as +1. In case the real part of the non-decided symbol is negative, the estimated symbol is decided as -1. Thus, the estimated symbol may be simply determined by determining the sign of the real-part of the non-decided symbol.

For computing the error function, the complex difference between the non-decided symbol and the estimated symbol is computed according to the following formulas:

$$ERR1 = C1 - \hat{C}1$$

$$ERR2 = C2 - \hat{C}2$$

Here, the terms ERR1 and ERR2 correspond to the error functions for the first and second polarization components. In the first above formula, C1 indicates a non-decided symbol of signal C1 and $\hat{C}1$ denotes the corresponding estimated symbol (either +1 or -1 in case of BPSK). Analogously, in the second above formula, C2 indicates a non-decided symbol of signal C2 and $\hat{C}2$ denotes the corresponding estimated symbol. Alternatively, ERR1 and ERR2 may be computed by subtracting the non-decided symbol from the decided symbol. The total error is a vector composed of two elements, ERR1 and ERR2. The error enables to update the filter coefficients Hij of FIR filters 1-4. In addition, the error may be used to update an estimated carrier frequency and carrier phase.

The update procedure is similar to the one used for the CMA. For each of the complex multitap filters 1-4 the procedure is the same: the increment of each tap value (i.e. filter coefficient) is computed as the product of the corresponding input times the corresponding error (either ERR1 or ERR2) times a gain parameter (denoted as GEQ).

For filters 1 (Hxx) and 2 (Hyx), the corresponding input is X1, while for filters 3 (Hxy) and 4 (Hyy), the corresponding input is X2. Because of the butterfly structure the error that is involved in the update of the filters 1 (Hxx) and 3 (Hxy) is ERR1, while for filters 2 (Hyx) and 4 (Hyy) the error function ERR2 is used. Please note that since filters 3 (Hxy) and 2 (Hyx) are on the crossing arms of the butterfly, these connect inputs and outputs with different indexes.

For example, the update of the nth tap of filter 1 (Hxx) is performed by the following update function:

$$\mathrm{Hxx(n)} = \mathrm{Hxx(n)} + \mathrm{GEQ} \cdot \mathrm{CONJ}(\, \mathrm{X1(n)}\; e^{-j \cdot Phi1} \,) \cdot \mathrm{ERR1}$$

where CONJ() denotes the complex conjugate function. For the other filters 2-4 the update equations can be written as:

$$\mathrm{Hxy(n)} = \mathrm{Hxy(n)} + \mathrm{GEQ} \cdot \mathrm{CONJ}(\, \mathrm{X2(n)}\; e^{-j \cdot Phi1} \,) \cdot \mathrm{ERR1}$$

$$\mathrm{Hyx(n)} = \mathrm{Hyx(n)} + \mathrm{GEQ} \cdot \mathrm{CONJ}(\, \mathrm{X1(n)}\; e^{-j \cdot Phi2} \,) \cdot \mathrm{ERR2}$$

$$\mathrm{Hyy(n)} = \mathrm{Hyy(n)} + \mathrm{GEQ} \cdot \mathrm{CONJ}(\, \mathrm{X2(n)}\; e^{-j \cdot Phi2} \,) \cdot \mathrm{ERR2}$$

Moreover, the phase corrections Phi1 and Phi2 (which are needed in order to obtain a stable constellation over the polar diagram) need to be determined. For BPSK, the two constellation points are -1 and +1. Any phase rotation with respect to the origin of the axes of the constellation diagram should be estimated and corrected.

Preferably, the phase corrections Phi1 and Phi2 are determined in a decision directed manner (i.e. based on a decision of signals C1 and C2) by a feedback loop. For controlling the phase corrections to the correct values by means of the control loop, one may continuously monitor the actual angle between a decided symbol and the non-decided symbol before decision. Such actual angle may be used as an error signal for the control loop. The control loop will adapt the phase corrections Phi1 and Phi2 as shown in Fig. 10 as long as the average angle is not zero. In locked condition, the error is a zero average value.

Fig. 11 illustrates how to determine an error signal which may be used for adjusting the phase correction Phi1 and Phi2. For explaining the principle of determining the phase correction, one may suppose that the two polarizations have been correctly separated by the demultiplexer/equalizer. In this case, typically a rotation around the point 0,0 in the phase constellation diagram remains. The error signal for controlling the phase correction Phi1 and Phi2 may be based on an estimate of angle θ between the non-decided symbol (see reference sign 44) before decision and the corresponding decided symbol (either +1 or -1 in case of BPSK).

In case the decided symbol is +1 and the non-decided symbol is located in quadrant 40, angle θ is positive (see "+"-sign in Fig 11). In case the decided symbol is +1 and the non-decided symbol is located in quadrant 43, angle θ is negative (see "-"-sign in Fig 11). In case the decided symbol is -1 and the non-decided symbol is located in quadrant 42, angle θ is positive (see "+"-sign in Fig 11). In case the decided symbol is -1 and the non-decided symbol is located in quadrant 41, angle θ is negative (see "-"-sign in Fig 11).

Computing the angle() function is quite complicated. For approximating the absolute value of the angle θ, one may use the imaginary part of the non-decided symbol. For estimating the correct sign of the angle θ, the decided symbol (either +1 and -1) has to be considered. The estimator $E = IMAG(C \cdot \hat{C})$ as shown in Fig. 11 a good estimator for the angle θ (C = non-decided symbol; $\hat{C}$ = decided symbol). The sign of E is positive (negative) whenever the sign of θ is positive (negative). E is a good approximation because $E \approx θ$ if $θ < 1$.

In accordance with this approximation, error signals ERROR VALUE 1 and ERROR VALUE 2 for controlling the phase corrections Phi1 and Phi2 may computed according to the following formulas;

$$ERROR\ VALUE\ 1 = IMAG\ (C1 \cdot \hat{C}1)$$

$$ERROR\ VALUE\ 2 = IMAG\ (C2 \cdot \hat{C}2)$$

Here, C1 and C2 are the output symbols of the scheme in Fig. 10, and $\hat{C}1$ and $\hat{C}2$ are the corresponding decided symbols. In case of a PDM BPSK modulation format each one of the estimated symbols $\hat{C}1$ and $\hat{C}2$ is one of the two possible values -1 or +1. The function IMAG() returns the imaginary part. The decision step that the decided symbol corresponds to the real part of the non-decided symbol (i.e. $\hat{C} = REAL(C)$) may be already incorporated in the formulas. In this case the formulas result in:

$$ERROR\ VALUE\ 1 = IMAG\ (C1 \cdot SIGN(REAL\ (C1))) = IMAG\ (C1) \cdot SIGN(REAL\ (C1))$$

$$ERROR\ VALUE\ 2 = IMAG\ (C2 \cdot SIGN(REAL\ (C2))) = IMAG\ (C2) \cdot SIGN(REAL\ (C2))$$

Thus, the error value may be computed as the imaginary part of C1 or C2 times the sign (see SIGN() operator above) of the real part of C1 ar C2, respectively. As evident from Fig. 11 the sign of the error value will be positive whenever imaginary and real parts of the complex symbol have the same sign, exactly like θ.

An embodiment of a decision-directed update (i.e. based on a decision of signals C1 and C2) procedure for the estimated phases Phi1 and Phi2 is shown in detail in Fig. 10. The update procedure is based on ERROR VALUE 1 and ERROR VALUE 2 as discussed above. It should be noted that ERROR VALUE 1 and ERROR VALUES 2 are different from ERR1 and ERR2 as discussed in connection with the control of the filter coefficients (nevertheless, these terms are related to each other). Moreover, it should be noted that the errors ERROR VALUE 1 and ERROR VALUE 2 may be differently computed as discussed above. E.g., the actual angle θ may be used instead of the approximation E.

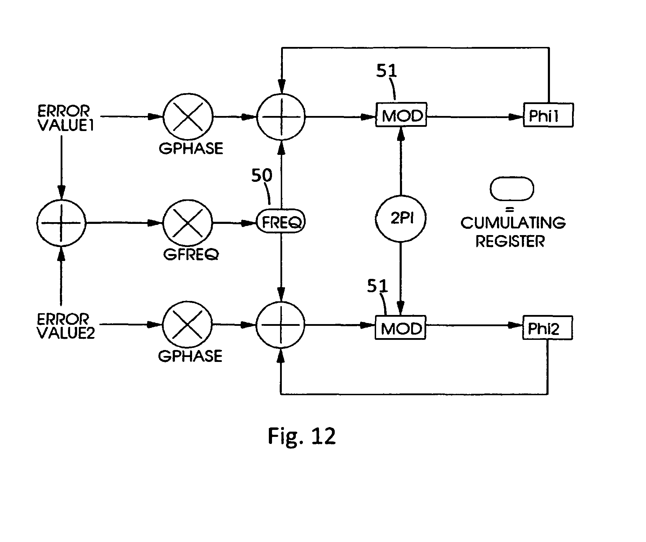

In Fig. 12, a frequency offset between the carrier signal and the LO signal is estimated (see estimation FREQ) by accumulating the sum of the two errors ERROR VALUE 1 and ERROR VALUE 2 over time, with the sum being weighted by a frequency estimation gain factor GFREQ. Alternatively, one may use only one of the errors for determining the frequency offset. The accumulation of the error values over time is realized by providing a cumulating register 50, i.e. the register 50 that contains the value of FREQ is a cumulating register. This means that the incoming value will not replace the current value but will add to this value. The updated value FREQ (t +1) of the estimation of the frequency offset is determined in line with the following equation:

$$FREQ\ (t + 1) = FREQ(t) + GREQ \cdot (ERROR\ VALUE1 + ERROR\ VALUE2)$$

The phase estimation as computed as the sum of the current estimated frequency (FREQ) plus the last estimated phase. In detail, the updated value Phi1 (t+1) of the phase correction Phi1 is determined by adding the estimation FREQ of the current estimated frequency offset, the current phase correction Phi1(t) and the current corresponding error signal ERROR VALUE 1 weighted by a phase estimation gain GPHASE. Moreover, since in case of a frequency offset the phase correction Phi1 continuously increases or decreases over time (in dependency of the sign of the frequency offset), the computed phase correction value has to be mapped in a $2\pi$ range. This is done by the modulus operation 51 (MOD $2\pi$). Thus, the updated value Phi1(t +1) of the phase correction is determined in line with the following equation:

$$\text{Phi1}(t + 1) = [\text{Phi1}(t) + \text{FREQ}(t) + \text{GPHASE} \cdot \text{ERROR VALUE1}] \text{ MOD } 2\pi$$

The updated value Phi2(t +1) of the phase correction for the other signal component is determined in a corresponding way:

$$\text{Phi2}(t + 1) = [\text{Phi2}(t) + \text{FREQ}(t) + \text{GPHASE} \cdot \text{ERROR VALUE2}] \text{ MOD } 2\pi$$

At convergence, ERROR VALUE 1 and ERROR VALUE 2 have an average value of zero.

The overall update procedure (i.e. for the filter coefficients Hij, for the frequency estimator FREQ and the phase corrections Phi1 and Phi2) depends on three gain parameters (i.e. GEQ, GPHASE, GFREQ) that weight the impact of the respective error value on the update of the complex filters, the frequency estimator and the phase estimator respectively.

As mentioned above, the gain for the frequency estimator (GFREQ) is quite low (e.g. 0.001). This results in a large time constant such that the frequency estimator is updated over a large number of incoming symbols. Thus, a lot of symbols are required in order to accurately estimate the frequency offset (e.g. roughly 1000 symbols). In other words: The estimator for the frequency is "averaged" over a large number of symbols.

The gain GPHASE of the phase estimator is higher than the gain of the frequency estimator. Preferably, the gain of the phase estimator should be still compatible to the requirements of an FPGA implementation with limited operating speed (in comparison to a full-custom implementation). The value of the gain GPHASE of the phase estimator depends on the transmission impairments: mainly nonlinear effects and laser linewidth. The PDM BPSK modulation format may tolerate lower gains (hence larger time constants and slower control) in comparison to the PDM QPSK modulation format. This is due to the fact that in BPSK the symbol alphabet has only 2 symbols which have to distinguished, whereas in QPSK the symbol alphabet has 4 symbols. Thus, for a BPSK signal, the carrier phase can be updated over a larger time distance without penalty, i.e. over more symbols (64 for example). This is beneficial for a decision-directed algorithm.

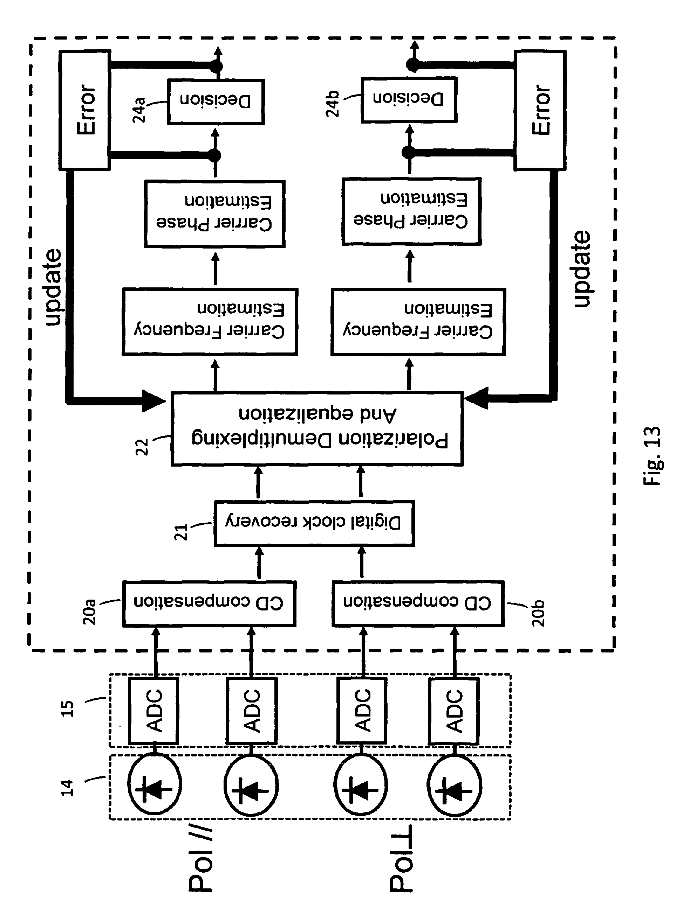

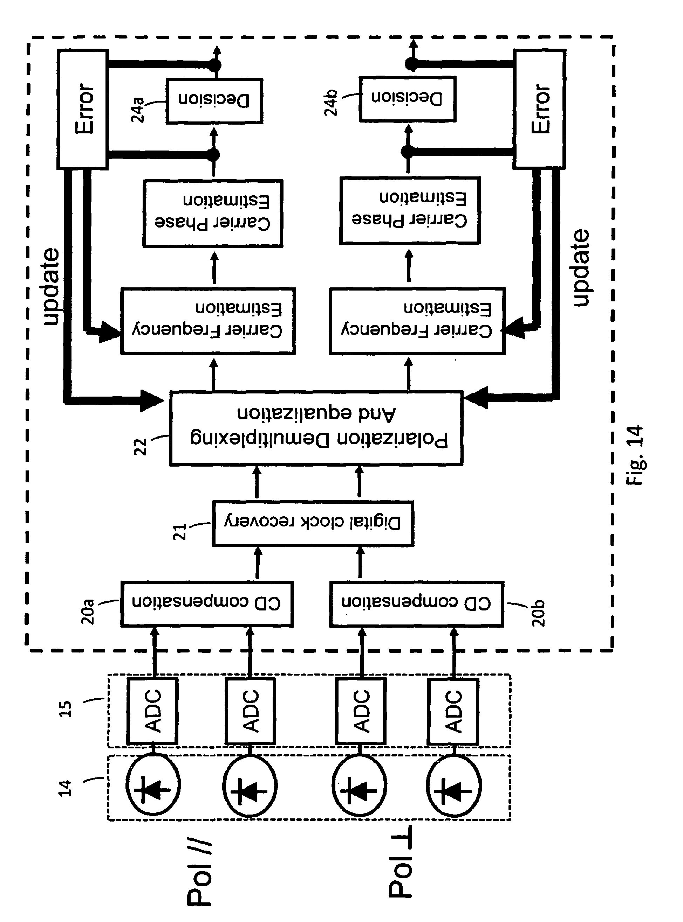

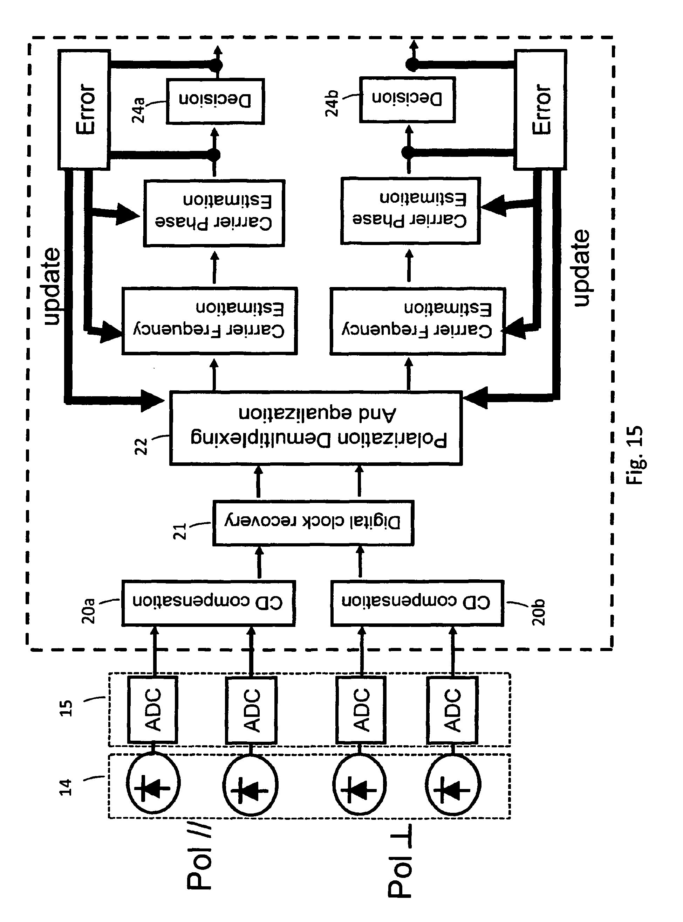

It should be noted that the phase correction Phi1 and Phi2 in Fig. 10 do not necessarily need to be determined by means of a decision-directed adaption scheme. E.g. one may use a convention simple feed-forward method for carrier frequency estimation and carrier phase estimation. The receiver in Fig. 13 uses the inventive decision-directed method for adjusting the filter coefficients of the combined polarization demultiplexer/equalizer block 22. However, carrier frequency estimation and carrier phase estimation are done using a conventional feed-forward method. According to a second option as show in Fig. 14, the filter coefficients of the polarization demultiplexer /equalizer block 22 are determined according to the inventive decision-directed method. Moreover, frequency estimation is done in a decision-directed manner. However, carrier phase estimation is done by using a simple feed forward method. According to a third option in Fig. 15, determining the filter coefficients as well as frequency and phase estimation are done in a decision-directed way.

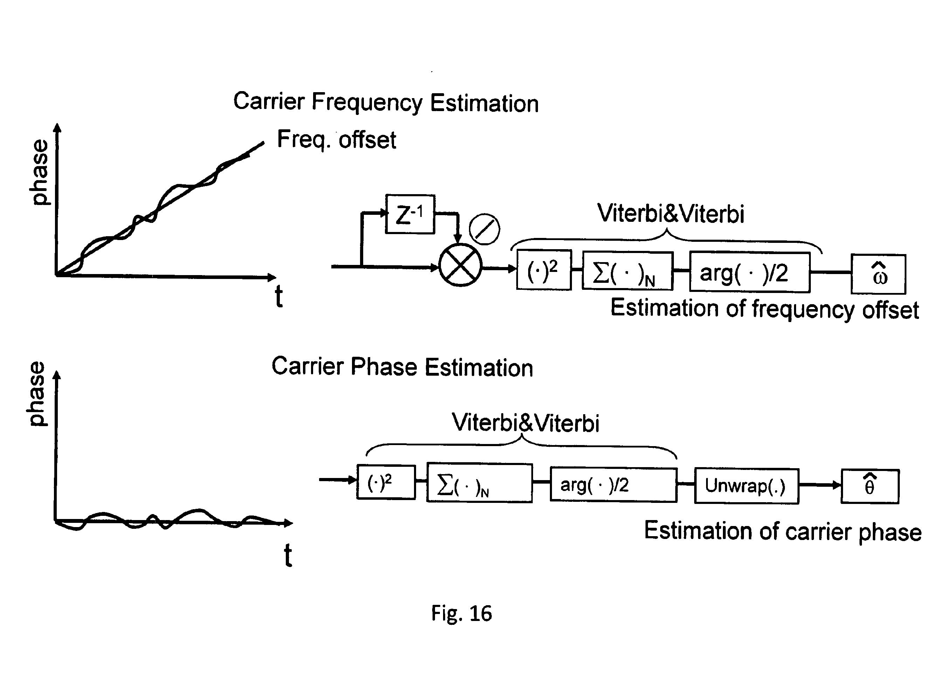

Fig. 16 illustrates one possible implementation for carrier frequency estimation (upper part of Fig. 16) and one possible implementation for carrier phase estimation (lower part of Fig. 16), both based on the well-known Viterbi & Viterbi algorithm.

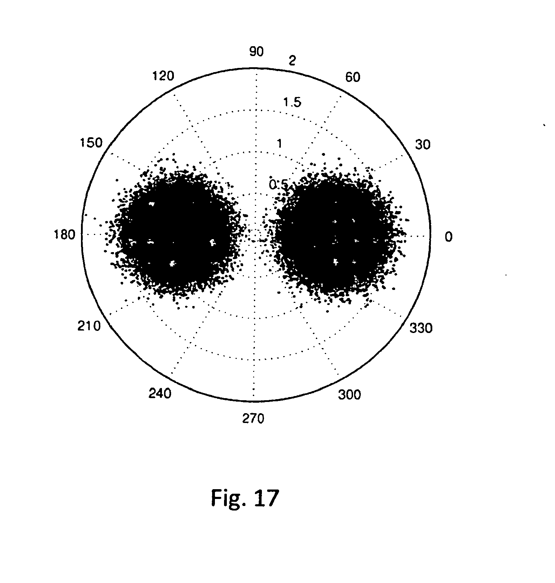

Fig. 17 illustrates the experimental constellation of a 43 Gbit/s PDM BPSK signal after digital signal processing and before decision. In contrast to Fig. 9 where CMA was used, here the inventive decision-directed algorithm was used. The dark constellation points correspond to one BPSK signal component on one polarization, whereas the light constellation points correspond to the other BPSK signal component on the orthogonal polarization. As evident from Fig. 17, the inventive concept allows correct separation of both polarization components.

**Claims**

1.  A decision-directed method for adjusting a polarization demultiplexer (1-4) in a coherent optical receiver for receiving a polarization division multiplexed phase modulated optical signal, the polarization demultiplexer outputting a first signal component (Y1) and a second signal component (Y2), the method comprising the steps of:

    - for at least one of the signal components, estimating a symbol selected from a set of given modulation symbols of the phase modulation scheme in dependency of a non-decided symbol (C1, C2) downstream of the polarization demultiplexer; and
- adjusting the polarization demultiplexer in dependency of the estimated symbol.

2. The method of claim 1, further comprising the step of determining a value of an error function depending on the estimated symbol and the non-decided symbol (C1, C2), and the polarization demultiplexer being adjusted in dependency of the error function.

3. The method of claim 1, wherein the non-decided symbol (C1, C2) was phase corrected before estimating the symbol.

4. The method of claim 3, wherein the phase correction (Phi1, Phi2) is determined by means of an error signal (ERROR VALUE1, ERROR VALUE2), with the error signal being dependent on an estimated symbol and a non-decided symbol (C1, C2) after phase correction.

5. The method of claim 4, wherein the error signal (ERROR VALUE1, ERROR VALUE2) is dependent on an angle between the estimated symbol and the non-decided symbol (C1, C2) after phase correction.

6. The method of claim 4, wherein an estimation (FREQ) of a frequency offset is determined by accumulating the error signal weighted by a frequency estimation gain (GFREQ), and an updated phase correction (Phi1, Phi2) is determined by adding

   - the current estimation of the frequency offset (FREQ),
   - the current phase correction, and
   - the current error signal weighted by a phase estimation gain (GPHASE).

7. The method of claim 2, wherein the value of the error function is determined by determining the difference between the non-decided symbol (C1, C2) and the estimated symbol.

8. The method of claim 1, wherein in the step of estimating a symbol comprises:

   - selecting that symbol out of the set of given modulation symbols which is nearest to the non-decided symbol (C1, C2).

9. The method of claim 1, wherein the method is for a receiver receiving a polarization division multiplexed BPSK signal.

10. The method of claim 1, wherein the method is further for adjusting a signal equalizer, and the signal equalizer is part of a combined polarization demultiplexer/equalizer unit which is based on 4 FIR filters (1-4) organized in a butterfly structure.

11. The method of claim 10, wherein updated filter coefficients are computed for adjusting the combined polarization demultiplexer/equalizer unit (1-4), with the increment of an updated filter coefficient being dependent on:

   - a sample of that signal component which is received by the respective FIR filter, and
   - a value of an error function, with the value of the error function depending on the estimated symbol and the non-decided symbol.

12. The method of claim 2, wherein the step of estimating a symbol comprises:

   - for the first signal component, estimating a first symbol in dependency of a first non-decided symbol (C1) downstream of the polarization demultiplexer; and
   - for the second signal component, estimating a second symbol in dependency of a second non-decided symbol downstream (C2) of the polarization demultiplexer,

   and wherein the step of determining a value of the error function comprises:

   - determining a value of a first error function depending on the first estimated symbol and the first non-decided symbol (C1); and
   - determining a value of a second error function depending the second estimated symbol and the second non-decided symbol (C2).

13. A method for polarization demultiplexing by means of a polarization demultiplexer (1-4) in an optical receiver for receiving a polarization multiplexed phase modulated optical signal, with the polarization demultiplexer being adjusted according to the method of claim 1.

14. An decision-directed apparatus for adjusting a polarization demultiplexer (1-4) in an coherent optical receiver for receiving a polarization multiplexed phase modulated optical signal, the polarization demultiplexer outputting a first signal component and a second signal component, the apparatus comprising:

> - means for estimating - for at least one of the signal components - a symbol selected from a set of given modulation symbols of the phase modulation scheme in dependency of a non-decided symbol in a signal component downstream of the polarization demultiplexer; and
> - means for adjusting the polarization demultiplexer in dependency of the estimated symbol.

15. A coherent optical receiver for receiving a polarization multiplexed phase modulated optical signal, the optical receiver comprising:

> - a polarization demultiplexer (1-4) outputting a first signal component (Y1) and a second signal component (Y2), and
> - a decision-directed apparatus for adjusting the polarization demultiplexer according to claim 14.


**Patentansprüche**

1. Entscheidungsgesteuertes Verfahren zum Einstellen eines Polarisationsdemultiplexers (1-4) in einem kohärenten optischen Empfänger zum Empfangen eines polarisationsgemultiplexten, phasenmodulierten optischen Signals, wobei der Polarisationsdemultiplexer eine erste Signalkomponente (Y1) und eine zweite Signalkomponente (Y2) ausgibt, wobei das Verfahren die folgenden Schritte umfasst:

> - Für mindestens eine der Signalkomponenten, Schätzen eines aus einem Satz von gegebenen Modulationssymbolen des Phasenmodulationsschemas ausgewählten Symbols in Abhängigkeit von einem nicht entschiedenen Symbol (C1, C2) stromabwärts des Polarisationsdemultiplexers; und
> - Einstellen des Polarisationsdemultiplexers in Abhängigkeit von dem geschätzten Symbol.

2. Verfahren nach Anspruch 1, weiterhin umfassend den Schritt des Ermittelns einer Größe einer Fehlfunktion in Abhängigkeit von dem geschätzten Symbol und dem nicht entschiedenen Symbol (C1, C2), wobei der Polarisationsdemultiplexer in Abhängigkeit von der Fehlfunktion eingestellt wird.

3. Verfahren nach Anspruch 1, wobei das nicht entschiedene Symbol (C1, C2) vor der Schätzung des Symbols phasenkorrigiert wurde.

4. Verfahren nach Anspruch 3, wobei die Phasenkorrektur (Phi1, Phi2) anhand eines Fehlersignals (ERROR VALUE1, ERROR VALUE2) bestimmt wird, wobei das Fehlersignal von einem geschätzten Symbol und einem nicht entschiedenen Symbol (C1, C2) nach der Phasenkorrektur abhängig ist.

5. Verfahren nach Anspruch 4, wobei das Fehlersignal (ERROR VALUE1, ERROR VALUE2) von einem Winkel zwischen dem geschätzten Symbol und dem nicht entschiedenen Symbol (C1, C2) nach der Phasenkorrektur abhängig ist.

6. Verfahren nach Anspruch 4, wobei eine Schätzung eines Frequenzversatzes (FREQ) durch Akkumulieren des mit einer Schätzungsfrequenzverstärkung (GFREQ) gewichteten Fehlersignals (GFREQ) ermittelt wird, und eine aktualisierte Phasenkorrektur (Phi1, Phi2) ermittelt wird durch Addieren

> - der aktuellen Schätzung des Frequenzversatzes (FREQ),
> - der aktuellen Phasenkorrektur, und
> - des mit einer Schätzungsphasenverstärkung (GPHASE) gewichteten aktuellen Fehlersignals.

7. Verfahren nach Anspruch 2, wobei die Größe der Fehlfunktion durch Ermitteln der Differenz zwischen dem nicht entschiedenen Symbol (C1, C2) und dem geschätzten Symbol ermittelt wird.

8. Verfahren nach Anspruch 1, wobei der Schritt des Schätzens eines Symbol umfasst:

   - Auswählen desjenigen Symbols aus dem Satz von gegebenen Modulationssymbolen, welches dem nicht entschiedenen Symbol (C1, C2) am nächsten kommt.

9. Verfahren nach Anspruch 1, wobei das Verfahren für einen Empfänger, welcher ein polarisationsgemultiplextes BPSK-Signal empfängt, bestimmt ist.

10. Verfahren nach Anspruch 1, wobei das Verfahren weiterhin für das Einstellen eines Signalentzerrers bestimmt und der Signalentzerrer Teil einer kombinierten Polarisationsdemultiplexer/-Entzerrereinheit ist, welche auf 4 in einer Butterfly-Struktur angeordneten FIR-Filtern (1-4) basiert.

11. Verfahren nach Anspruch 10, wobei aktualisierte Filterkoeffizienten zum Einstellen der kombinierten Polarisationsdemultiplexer/-Entzerrereinheit (1-4) berechnet werden, wobei die Erhöhung eines aktualisierten Filterkoeffizienten abhängig ist von:

   - Einem Abtastwert derjenigen Signalkomponente, welche an dem entsprechenden FIR-Filter empfangen wird, und
   - einer Größe einer Fehlfunktion, wobei die Größe der Fehlfunktion von dem geschätzten Symbol und dem nicht entschiedenen Symbol abhängt.

12. Verfahren nach Anspruch 2, wobei der Schritt des Schätzens eines Symbols umfasst:

   - für die erste Signalkomponente, Schätzen eines ersten Symbols in Abhängigkeit von einem ersten nicht entschiedenen Symbol (C1) stromabwärts des Polarisationsdemultiplexers; und
   - für die zweite Signalkomponente, Schätzen eines zweiten Symbols in Abhängigkeit von einem zweiten nicht entschiedenen Symbol (C2) stromabwärts des Polarisationsdemultiplexers,

   und wobei der Schritt des Ermittelns einer Größe der Fehlfunktion umfasst:

   - Ermitteln einer Größe einer ersten Fehlfunktion in Abhängigkeit von dem ersten geschätzten Symbol und dem ersten nicht entschiedenen Symbol (C1); und
   - Ermitteln einer Größe einer zweiten Fehlfunktion in Abhängigkeit von dem zweiten geschätzten Symbol und dem zweiten nicht entschiedenen Symbol (C2).

13. Verfahren zum Polarisationsdemultiplexen anhand eines Polarisationsdemultiplexers (1-4) in einem optischen Empfänger für den Empfang eines polarisationsgemultiplexten, phasenmodulierten Signals, wobei der Polarisationsdemultiplexer gemäß dem Verfahren nach Anspruch 1 eingestellt wird.

14. Entscheidungsgesteuerte Vorrichtung zum Einstellen eines Polarisationsdemultiplexers (1-4) in einem kohärenten optischen Empfänger für den Empfang eines polarisationsgemultiplexten, phasenmodulierten Signals, wobei der Polarisationsdemultiplexer eine erste Signalkomponente und eine zweite Signalkomponente ausgibt, wobei die Vorrichtung umfasst:

   - Mittel zum Schätzen - für mindestens eine der Signalkomponenten - eines aus einem Satz von gegebenen Modulationssymbolen eines Phasenmodulationsschemas ausgewählten Symbols in Abhängigkeit von einem nicht entschiedenen Symbols in einer Signalkomponente stromabwärts des Polarisationsdemultiplexers; und
   - Mittel zum Einstellen des Polarisationsdemultiplexers in Abhängigkeit von dem geschätzten Symbol.

15. Kohärenter optischer Empfänger für den Empfang eines polarisationsgemultiplexten, phasenmodulierten Signals, wobei der optische Empfänger umfasst:

   - Einen Polarisationsdemultiplexer (1-4), welcher eine erste Signalkomponente (Y1) und eine zweite Signalkomponente (Y2) ausgibt, und
   - eine entscheidungsgesteuerte Vorrichtung zum Einstellen des Polarisationsdemultiplexers gemäß Anspruch 14.

**Revendications**

1. Procédé orienté décision pour ajuster un démultiplexeur de polarisation (1-4) dans un récepteur optique cohérent pour recevoir un signal optique multiplexé par répartition de polarisation modulé en phase, le démultiplexeur de polarisation émettant un premier composant de signal (Y1) et un second composant de signal (Y2), le procédé comprenant les étapes suivantes :

   - pour au moins l'un des composants de signal, estimation d'un symbole sélectionné parmi un ensemble de symboles de modulation donnés du schéma de modulation de phase en fonction d'un symbole non décidé (C1, C2) en aval du démultiplexeur de polarisation ; et
   - ajustement du démultiplexeur de polarisation en fonction du symbole estimé.

2. Procédé selon la revendication 1, comprenant en outre l'étape de détermination d'une valeur d'une fonction d'erreur en fonction du symbole estimé et du symbole non décidé (C1, C2), le démultiplexeur de polarisation étant ajusté en fonction de la fonction d'erreur.

3. Procédé selon la revendication 1, dans lequel le symbole non décidé (C1, C2) a été corrigé en phase avant l'estimation du symbole.

4. Procédé selon la revendication 3, dans lequel la correction de phase (Phi1, Phi2) est déterminée au moyen d'un signal d'erreur (ERROR VALUE1, ERROR VALUE2), le signal d'erreur dépendant d'un symbole estimé et d'un symbole non décidé (C1, C2) après la correction de phase.

5. Procédé selon la revendication 4, dans lequel le signal d'erreur (ERROR VALUE1, ERROR VALUE2) dépend d'un angle entre le symbole estimé et le symbole non décidé (C1, C2) après la correction de phase.

6. Procédé selon la revendication 4, dans lequel une estimation (FREQ) d'un décalage de fréquence est déterminée en cumulant le signal d'erreur pondéré par un gain d'estimation de fréquence (GFREQ), et une correction de phase mise à jour (Phi1, Phi2) est déterminée en ajoutant

   - l'estimation courante du décalage de fréquence (FREQ),
   - la correction de phase courante, et
   - le signal d'erreur courant pondéré par un gain d'estimation de phase (GPHASE).

7. Procédé selon la revendication 2, dans lequel la valeur de la fonction d'erreur est déterminée en déterminant la différence entre le symbole non décidé (C1, C2) et le symbole estimé.

8. Procédé selon la revendication 1, dans lequel l'étape d'estimation d'un symbole comprend :

   - la sélection du symbole parmi l'ensemble de symboles de modulation donnés qui est le plus proche du symbole non décidé (C1, C2).

9. Procédé selon la revendication 1, dans lequel le procédé est destiné à un récepteur qui reçoit un signal MDBP multiplexé par répartition de polarisation.

10. Procédé selon la revendication 1, dans lequel le procédé est en outre destiné à ajuster un égaliseur de signal, l'égaliseur de signal faisant partie d'une unité combinée démultiplexeur/égaliseur de polarisation qui est basée sur 4 filtres FIR (1-4) organisés selon une structure en papillon.

11. Procédé selon la revendication 10, dans lequel des coefficients de filtrage mis à jour sont calculés pour ajuster l'unité combinée démultiplexeur/égaliseur de polarisation (1-4), l'incrémentation d'un coefficient de filtrage mis à jour dépendant de :

   - un échantillon du composant de signal qui est reçu par le filtre FIR respectif ; et

- une valeur d'une fonction d'erreur, la valeur de la fonction d'erreur dépendant du symbole estimé et du symbole non décidé.

**12.** Procédé selon la revendication 2, dans lequel l'étape d'estimation d'un symbole comprend :

- pour le premier composant de signal, l'estimation d'un premier symbole dépendant d'un premier symbole non décidé (C1) en aval du démultiplexeur de polarisation ; et
- pour le second composant de signal, l'estimation d'un second symbole dépendant d'un second symbole non décidé (C2) en aval du démultiplexeur de polarisation,

et dans lequel l'étape de détermination d'une valeur de la fonction d'erreur comprend :

- la détermination d'une valeur d'une première fonction d'erreur en fonction du premier symbole estimé et du premier symbole non décidé (C1) ; et
- la détermination d'une valeur d'une seconde fonction d'erreur en fonction du second symbole estimé et du second symbole non décidé (C2).

**13.** Procédé de démultiplexage de polarisation au moyen d'un démultiplexeur de polarisation (1-4) dans un récepteur optique pour recevoir un signal optique multiplexé par répartition de polarisation modulé en phase, le démultiplexeur de polarisation étant ajusté conformément au procédé selon la revendication 1.

**14.** Appareil orienté décision pour ajuster un démultiplexeur de polarisation (1-4) dans un récepteur optique cohérent pour recevoir un signal optique multiplexé par répartition de polarisation modulé en phase, le démultiplexeur de polarisation émettant un premier composant de signal et un second composant de signal, l'appareil comprenant :

- moyens pour estimer, pour au moins l'un des composants de signal, un symbole sélectionné parmi un ensemble de symboles de modulation donnés du schéma de modulation de phase en fonction d'un symbole non décidé dans un composant de signal en aval du démultiplexeur de polarisation ; et
- moyens pour ajuster le démultiplexeur de polarisation en fonction du symbole estimé.

**15.** Récepteur optique cohérent pour recevoir un signal optique multiplexé par répartition de polarisation modulé en phase, le récepteur optique comprenant :

- un démultiplexeur de polarisation (1-4) émettant un premier composant de signal (Y1) et
- un second composant de signal (Y2), et un appareil orienté décision pour ajuster le démultiplexeur de polarisation selon la revendication 14.

Fig. 1

Fig. 2

Fig. 3

Signal X

Signal Y

Resulting signal

Small portion of
Signal X

Axis of coherent receiver

$+$ $(\Delta\phi=0)$ $=$ CMA detects intensity fluctuations

$+$ $(\Delta\phi=\pi/6)$ $=$ CMA detects partly intensity fluctuations

$+$ $(\Delta\phi=\pi/3)$ $=$ CMA does not detect intensity fluctuation

$+$ $(\Delta\phi=\pi/2)$ $=$ CMA does not detect intensity fluctuation

Ratio of power from the other polarization can continue to increase up to dramatic cases

Fig. 4

EP 2 169 867 B1

Fig. 5

EP 2 169 867 B1

Fig. 6

EP 2 169 867 B1

Fig. 7

**Fig. 8**

**Fig. 9**

Fig. 10

Fig. 11

Fig. 12

Fig. 13

Fig. 14

Fig. 15

Fig. 16

Fig. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9118455 A
- US 2008017062 A1
- US 20030175034 A1

**Non-patent literature cited in the description**

- **S.J. SAVORY et al.** Digital Equalisation of 40Gbit/s per Wavelength Transmission over 2480km of Standard Fibre without Optical Dispersion Compensation. *Proceedings of ECOC 2006,* September 2006
- Digital filters for coherent optical receivers. *Seb J. Savory, Optics Express,* 21 January 2008, vol. 16 (2), 804-817